# EUROPÄISCHE PATENTSCHRIFT

(11) **EP 4 122 312 B1**
(45) Veröffentlichungstag und Bekanntmachung des Hinweises auf die Patenterteilung: **06.11.2024**
(21) Anmeldenummer: 22185512.5
(22) Anmeldetag: 18.07.2022
(51) Int. Cl.: A01F 25/20, A01K 5/00, A01K 5/02

(54) **VERFAHREN ZUR STEUERUNG EINES BELADEVORGANGS EINES FUTTERMISCHWAGENS SOWIE FUTTERMISCHWAGEN**
METHOD FOR CONTROLLING A LOADING PROCESS OF A FODDER MIXING TRUCK AND FODDER MIXING TRUCK
PROCÉDÉ DE COMMANDE D'UN PROCESSUS DE CHARGEMENT D'UN CHARIOT DE MÉLANGE D'ALIMENTS POUR ANIMAUX, AINSI QUE CHARIOT DE MÉLANGE D'ALIMENTS POUR ANIMAUX

(30) Priorität: 21.07.2021 DE 102021118930
(43) Veröffentlichungstag der Anmeldung: 25.01.2023
(73) Patentinhaber: Mayer Verwaltungs GmbH & Co. KG, 84529 Tittmoning (DE)
(72) Erfinder: Twickler, Philipp, 84529 Tittmoning (DE); Weilbuchner, Josef, 83379 Wonneberg (DE)
(74) Vertreter: Flach Bauer & Partner Patentanwälte mbB

(56) Entgegenhaltungen:
- EP-A1- 3 510 859
- DE-A1- 102010 033 887
- DE-B4- 102010 033 886
- DE-U1- 20 105 747
- PROFI MAGAZIN: "Selbstfahrender Futtermischwagen Triotrac M von Trioliet | profi #Fahrbbericht", 20 November 2020 (2020-11-20), XP093003031, Retrieved from the Internet <URL:https://www.youtube.com/watch?v=vSOqQYan_Y0> [retrieved on 20221129]

## Beschreibung

Die Erfindung betrifft ein Verfahren zur Steuerung eines Beladevorgangs eines Futtermischwagens sowie einen Futtermischwagen.

Selbstfahrend Futtermischwägen mit Aufnahmewerkzeug für Futter sind bekannt. Während eines Beladevorgangs muss der Fahrer dabei zunächst zum richtigen Lagerort der als nächstes in den Futtermischwagen einzufüllenden Futterkomponente fahren und dort die Futterkomponente mittels des Aufnahmewerkzeugs aufnehmen. Beim Befüllen muss er dabei verschiedene Ladekomponenten aktivieren, wie ein Beladeband oder ein Mischwerkzeug, und zugleich sicherstellen, dass er die gewünschte Zielmenge an Futter aufnimmt. Üblicherweise steuert der Fahrer dabei einen Arm des Aufnahmewerkzeugs mit einer Fräswalze und erhält Rückmeldung über die bisher aufgenommene Menge an Futter (Ist-Menge).

Der gesamte Beladevorgang wird dabei ausschließlich vom Fahrer gesteuert, d. h. der Fahrer bestimmt sämtliche Betriebsparameter der Ladekomponenten, wodurch der Beladevorgang für den Fahrer äußerst komplex und somit fehleranfällig ist.

Zudem sind vollautonome Futtermischwägen bekannt. Zum Beispiel offenbart die EP 3 510 859 A1 ein Steuerungsverfahren für einen vollautonomen Futtermischwagen. Der Futtermischwagen umfasst einen Futterbehälter und eine Ladekomponente zur Durchführung des Beladevorgangs des Futtermischwagens mit Futter. Weiterhin umfasst der Futtermischwagen eine Beladungs-Steuereinheit. Die Beladungs-Steuereinheit zeichnet bei einer sog. "Teach-In Fahrt", bei der der Futtermischwagen von einem Fahrer gesteuert wird, die Tätigkeiten eines gesamten Fütterungszyklus auf und kann diesen gesamten Fütterungszyklus später erneut abfahren.

Es ist daher Aufgabe der Erfindung, ein Verfahren zur Steuerung eines Beladevorgangs sowie einen hierfür vorgesehenen Futtermischwagen bereitzustellen, bei denen die vom Fahrer auszuführenden Tätigkeiten reduziert und Fehler verhindert werden.

Die Aufgabe wird gelöst durch ein Verfahren zur Steuerung eines Beladevorgangs eines Futtermischwagens mit einem Futterbehälter, wenigstens einer Ladekomponente und einer Beladungs-Steuereinheit zur Steuerung der Ladekomponente zur Durchführung des Beladevorgangs des Futtermischwagens mit Futter. Das Verfahren umfasst die folgenden Schritte:
- Erhalten von Informationen über wenigstens eine in den Futtermischwagen einzufüllende Futterkomponente durch die Steuereinheit,
- Ansteuern der wenigstens einen Ladekomponente in Abhängigkeit der wenigstens einen einzufüllenden Futterkomponente durch die Steuereinheit.

Dabei steuert die Steuereinheit die wenigstens eine Ladekomponente nur nach Aktivierung eines Befüllvorgangs oder nach Aktivierung der entsprechenden Ladekomponente durch den Fahrer des Futtermischwagens an.

Dadurch, dass die verschiedenen Ladekomponenten nun automatisch von der Steuereinheit und in Abhängigkeit der einzufüllenden Futterkomponente gesteuert werden, werden Fehlbedienungen verhindert und die Belastung des Fahrers reduziert. Zudem wird gewährleistet, dass der Fahrer stets die Kontrolle über den Futtermischwagen behält.

Im Rahmen dieser Erfindung werden als Ladekomponente insbesondere diejenigen Komponenten des Futtermischwagens verstanden, die einen Beladevorgang des Futtermischwagens unterstützen bzw. Fehler beim Beladevorgang vermeiden. Insbesondere sind Komponenten, die ausschließlich zur Bewegung des Futtermischwagens als Ganzes dienen, keine Ladekomponente im Rahmen dieser Erfindung.

Zudem ist im Rahmen der Erfindung unter dem Begriff "steuern" auch "regeln" zu verstehen.

Die Beladungs-Steuereinheit kann Teil eines Ladecomputers des Futtermischwagens sein.

Insbesondere legt die Steuereinheit die Informationen zur späteren Verwendung in einem Speicher ab.

Der Futtermischwagen ist beispielsweise selbstfahrend, wird also nicht durch eine Zugmaschine gezogen. Der Futtermischwagen ist insbesondere jedoch nicht autonom oder teilautonom.

In einer Ausgestaltung der Erfindung umfasst die Informationen über die Futterkomponente die Art der Futterkomponente, wie Kraftfutter, Maissilage oder Stroh, die einzufüllende Zielmenge der Futterkomponente, wenigstens einen optimalen Betriebsparameter der Ladekomponente für diese Futterkomponente und/oder den Lagerort der Futterkomponente, wodurch der Steuereinheit weitere Informationen übermittelt werden können, sodass diese einfach ausgeführt sein kann.

Auch ist es denkbar, dass für jede Futterkomponente die optimalen Betriebsparameter der Ladekomponente und/oder der jeweilige Lagerort in der Steuereinheit hinterlegt sind und/oder von der Steuereinheit von einem Server abrufbar sind.

Beispielsweise ist die wenigstens eine Ladekomponente eine mechanische Ladekomponente und/oder eine kontrollierende Ladekomponente, sodass verschiedene Ladekomponenten von der Steuereinheit gesteuert werden können.

In einer Ausführungsform der Erfindung steuert die Steuereinheit eine mechanische Ladekomponente nur nach Aktivierung eines Befüllvorgangs oder nach Aktivierung der entsprechenden Ladekomponente durch den Fahrer des Futtermischwagens an.

Beispielsweise ist die wenigstens eine Ladekomponente ein Aufnahmewerkzeug für Futter, insbesondere eine Fräswalze des Futtermischwagens, insbesondere wobei die Steuereinheit die Aufnahmegeschwindigkeit, insbesondere die Rotationgeschwindigkeit der Fräswalze, in Abhängigkeit der einzufüllenden Futterkomponente steuert. Dadurch lässt sich die eingefüllte Futtermenge optimal dosieren und Verschnitt sowie starke Verunreinigungen werden vermieden.

Das Aufnahmewerkzeug bzw. die Fräswalze ist zum Beispiel eine mechanische Ladekomponente.

Es ist auch denkbar, dass die Steuereinheit die Bewegung des Aufnahmewerkzeugs bzw. der Fräswalze steuert. In einer Ausführungsform wird die Bewegung des Aufnahmewerkzeugs bzw. der Fräswalze jedoch nicht von der Steuereinheit gesteuert.

In einer Ausgestaltung der Erfindung hat das Verfahren die folgenden weiteren Schritte:
- die Steuereinheit erhält eine Zielmenge an Futter der einzufüllenden Futterkomponente,
- die Steuereinheit ermittelt die Ist-Menge an eingefülltem Futter der einzufüllenden Futterkomponente, und
- die Steuereinheit steuert die Aufnahmegeschwindigkeit in Abhängigkeit der Zielmenge und der Ist-Menge,
insbesondere wobei die Steuereinheit das Aufnahmewerkzeug stoppt, sobald die Ist-Menge der Zielmenge entspricht, und/oder wobei die Steuereinheit die Aufnahmegeschwindigkeit reduziert, bevor die Ist-Menge der Zielmenge entspricht, insbesondere wenn die Ist-Menge einen von der Zielmenge abhängigen Schwellwert überschreitet.

Auf diese Weise kann sichergestellt werden, dass die Zielmenge nicht überschritten aber trotzdem exakt erreicht wird.

Zur exakten Bestimmung der Ist-Menge kann der Futtermischwagen eine Wiegevorrichtung für den Futterbehälter aufweisen, wobei die Steuereinheit die Messwerte der Wiegevorrichtung erhält und anhand dessen die Ist-Menge ermittelt.

In einer weiteren Ausführungsform der Erfindung ist die wenigstens eine Ladekomponente ein Beladeband des Futtermischwagens, insbesondere wobei die Steuereinheit die Bandgeschwindigkeit des Beladebandes in Abhängigkeit der einzufüllenden Futterkomponente steuert, wodurch der Arbeitsaufwand für den Fahrer weiter verringert wird.

Das Beladeband kann eine mechanische Ladekomponente sein.

Das Beladeband erstreckt sich beispielsweise vom Aufnahmewerkzeug zu dem Futterbehälter.

Um Verunreinigungen zu vermeiden und/oder Energie zu sparen, kann die Steuereinheit die Geschwindigkeit des Beladebands auch in Abhängigkeit der Aufnahmegeschwindigkeit, insbesondere der Rotationgeschwindigkeit der Fräswalze steuern.

In einer weiteren Ausführungsform der Erfindung ist die wenigstens eine Ladekomponente ein Mischwerkzeug, insbesondere eine Mischschnecke des Futtermischwagens, insbesondere wobei die Steuereinheit das Mischwerkzeug in Abhängigkeit der einzufüllenden Futterkomponente startet oder stoppt und/oder die Mischerdrehzahl des Mischwerkzeugs in Abhängigkeit der einzufüllenden Futterkomponente steuert. Durch die Steuerung des Mischwerkzeugs wird der Fahrer weiter entlastet und zudem werden lange Mischzeiten vermieden.

Das Mischwerkzeug kann eine mechanische Ladekomponente darstellen.

Insbesondere ist das Mischwerkzeug im Futterbehälter angeordnet.

In einer Ausgestaltung der Erfindung ist die wenigstens eine Ladekomponente ein Hauptmotor des Futtermischwagens, insbesondere wobei die Steuereinheit die Motordrehzahl des Hauptmotors in Abhängigkeit der einzufüllenden Futterkomponente steuert. Auf diese Weise kann die Motordrehzahl und damit der Energieverbrauch an den Leistungsbedarf der Ladekomponenten angepasst werden.

Der Hauptmotor ist zum Beispiel eine mechanische Ladekomponente.

Der Hauptmotor kann ein Verbrennungsmotor oder ein Elektromotor sein. Der Hauptmotor dient insbesondere auch zur Bewegung des Futtermischwagens als Ganzes.

Um Fehler bei der Anfahrt zum Lagerort der Futterkomponente zu vermeiden, kann die wenigstens eine Ladekomponente ein Navigationssystem des Futtermischwagens sein, insbesondere basierend auf einem globalen Navigationssatellitensystem. Die Steuereinheit kann den Lagerort der einzufüllenden Futterkomponente erhalten, und der aktuelle Standort des Futtermischwagens kann bestimmt und mit dem Lagerort der Futterkomponente verglichen werden, wobei in Abhängigkeit des Vergleichs weitere Ladekomponenten angesteuert werden und/oder dem Fahrer des Futtermischwagens ein Hinweis ausgegeben wird.

Zum Beispiel enthält der Hinweis Informationen darüber, ob sich der Futtermischwagen am Lagerort der zu einzufüllenden Futterkomponente befindet und/oder der Hinweis enthält Anweisungen zu welchem Lagerort der Futtermischwagen zu fahren ist bzw. wie dieser Lagerort zu erreichen ist.

Es ist denkbar, dass weitere Ladekomponenten nicht durch die Steuereinheit aktiviert werden und/oder nicht durch den Fahrer aktivierbar sind, wenn sich der Futtermischwagen nicht am Lagerort der einzufüllenden Futterkomponente befindet.

Das Navigationssystem kann eine kontrollierende Ladekomponente darstellen.

Zur einfachen und flexiblen Bedienung kann die Steuereinheit die Informationen über die wenigstens eine in den Futtermischwagen einzufüllende Futterkomponente durch Eingabe des Fahrers an einer Benutzerschnittstelle des Futtermischwagens, durch Empfangen einer Eingabe eines Benutzers an einem entfernten Computer und/oder durch Erhalten eines Laderezepts, das verschiedene Futterkomponenten und optional deren Zielmenge umfasst, erhalten.

Ferner wird die Aufgabe gelöst durch einen Futtermischwagen mit einem Futterbehälter, wenigstens einer Ladekomponente und einer Beladungs-Steuereinheit zur Steuerung der Ladekomponente zur Durchführung eines Beladevorgangs des Futtermischwagens mit Futter, wobei der Futtermischwagen, insbesondere die Steuereinheit dazu eingerichtet ist, ein Verfahren wie zuvor beschrieben auszuführen, insbesondere wobei der Futtermischwagen eine Wiegevorrichtung und/oder einen Ladecomputer aufweist.

Die zum Verfahren ausgeführten Merkmale und Vorteile gelten gleichermaßen für den Futtermischwagen und umgekehrt. Weiterhin ist jedes Teil des Futtermischwagens dazu ausgebildet und/oder eingerichtet, die ihm zugeordneten Schritte des Verfahren durchzuführen.

Beispielsweise weist der Futtermischwagen ein Aufnahmewerkzeug für Futter, insbesondere eine Fräswalze; ein Beladeband; ein Mischwerkzeug, insbesondere eine Mischschnecke; einen Hauptmotor; und/oder ein Navigationssystem als Ladekomponente auf.

Weitere Merkmale und Vorteile der Erfindung ergeben sich aus der nachfolgenden Beschreibung sowie aus den beigefügten Zeichnungen, auf die Bezug genommen wird. In den Zeichnungen zeigen:
- Fig. 1:: einen erfindungsgemäßen Futtermischwagen in Seitenansicht, und
- Fig. 2:: ein schematisches Ablaufdiagramm eines erfindungsgemäßen Verfahrens.

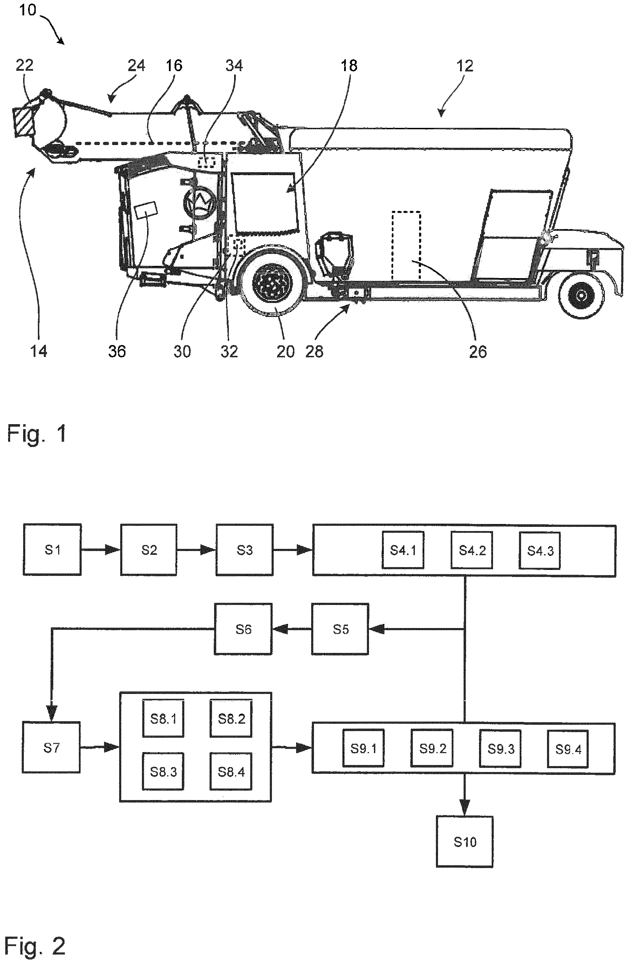

In Figur 1 ist ein Futtermischwagen 10 dargestellt. Der Futtermischwagen 10 weist einen Futterbehälter 12, ein Aufnahmewerkzeug 14, ein Beladeband 16 sowie einen Hauptmotor 18, beispielsweise einen Verbrennungsmotor oder einen Elektromotor, auf.

Außerdem hat der Futtermischwagen 10 mehrere Räder 20 sowie einen Antriebsstrang (nicht gezeigt), wobei der Futtermischwagen 10 mittels der Räder 20 und des Antriebsstrangs als Ganzes bewegt werden kann.

Das Aufnahmewerkzeug 14 ist im gezeigten Ausführungsbeispiel eine Fräswalze 22, die an einem Arm 24 bewegbar angeordnet ist.

Das Aufnahmewerkzeug 14 bzw. die Fräswalze 22 wird mittels des Hauptmotors 18 angetrieben, sodass der Hauptmotor 18 nicht nur zur Bewegung des Futtermischwagens 10 als Ganzes dient.

Das Beladeband 16 ist zwischen dem Aufnahmewerkzeug 14 und dem Futterbehälter 12 angeordnet, beispielsweise im oder auf dem Arm 24. Das Beladeband 16 ist dazu eingerichtet, vom Aufnahmewerkzeug 14 aufgenommenes Futter in den Futterbehälter 12 zu befördern.

Der Futterbehälter 12 dient zur Aufbewahrung und Vermischung des aufgenommenen Futters, wobei in dem Futterbehälter 12 wenigstens ein rotierbares Mischwerkzeug 26, beispielsweise eine Mischschnecke angeordnet ist, die das im Futterbehälter 12 befindliche Futter vermischt und gegebenenfalls zerkleinert.

Zudem weist der Futtermischwagen 10 verschiedene elektronische Bauteile auf, nämlich eine Wiegevorrichtung 28, einen Ladecomputer 30 mit einer Beladungs-Steuereinheit 32 (im Folgenden kurz "Steuereinheit 32"), ein Navigationssystem 34 sowie eine Benutzerschnittstelle 36 mit Ein- und/oder Ausgabemitteln.

Die Wiegevorrichtung 28 ist am Futterbehälter 12 angebracht und ist dazu eingerichtet, das Gewicht des Futterbehälters 12 und somit das Gewicht des im Futterbehälter 12 befindlichen Futters zu bestimmen.

Der Ladecomputer 30 ist mit der Wiegevorrichtung 28, dem Navigationssystem 34 und der Benutzerschnittstelle 36 sowie zur Ansteuerung mit dem Aufnahmewerkzeug 14, dem Beladeband 16, dem Hauptmotor 18, der Fräswalze 22, dem Arm 24 und dem Mischwerkzeug 26 verbunden.

Die Steuereinheit 32 kann separat oder als Teil des Ladecomputers 30 ausgebildet sein, entweder als Hardware- oder als Softwaremodul.

Denkbar ist auch, dass neben der Beladungs-Steuereinheit 32 weitere Steuereinheiten, beispielsweise eine Entlade-Steuereinheit vorhanden sind, die ebenfalls als Hard- oder Softwaremodul ausgeführt sein können.

Das Navigationssystem 34 ist beispielsweise für die Verwendung mit einem globalen Navigationssatellitensystem (GNSS), wie GPS, GLONASS, Galileo oder dergleichen, ausgebildet.

Die Benutzerschnittstelle 36 hat Ein- und Ausgabemittel, beispielsweise einen Bildschirm, der insbesondere berührungsempfindlich ausgebildet ist. Die Benutzerschnittstelle 36 ist vorzugsweise in der Fahrerkabine des Futtermischwagens 10 angeordnet. Die Benutzerschnittstelle 36 kann sowohl vom Ladecomputer 30 als auch vom Navigationssystem 34 verwendet werden.

Das Aufnahmewerkzeug 14, das Beladeband 16, der Hauptmotor 18, die Fräswalze 22 und das Mischwerkzeug 26 sind mechanische Ladekomponenten, da sie zur Beladung des Futterbehälters 12 verwendet werden. Das Navigationssystem 34 stellt eine kontrollierende Ladekomponente dar, da mittels des Navigationssystems 34 sichergestellt werden kann, dass die richtige Futterkomponente aufgenommen wird.

Die Steuereinheit 32 ist dazu ausgebildet, das Aufnahmewerkzeug 14 bzw. die Fräswalze 22 und/oder den Arm 24, das Beladeband 16, den Hauptmotor 18, das Mischwerkzeug 26 und/oder das Navigationssystem 34 während eines Beladevorgangs zu steuern.

Die Steuereinheit 32 bzw. der Ladecomputer 30 haben beispielsweise ein drahtloses Kommunikationsmodul, mittels dem sie eine Datenverbindung mit einem anderen Computer, Servern oder dem Internet aufbauen können.

In Figur 2 ist ein schematisches Ablaufdiagramm eines beispielhaften erfindungsgemäßen Beladevorgangs dargestellt.

Im ersten Schritt S1 legt ein Benutzer oder der Fahrer des Futtermischwagens 10 die Ladung für den Futtermischwagen fest. Hierzu wählt er wenigstens eine Futterkomponente, also deren Art wie Maissilage, Kraftfutter oder Stroh, und die Menge dieser Futterkomponente, im folgenden Zielmenge genannt, aus. Es können auch mehrere Futterkomponenten mit verschiedenen Zielmenge ausgesucht werden, wobei dann von einem Beladungsrezept die Rede ist.

Denkbar ist selbstverständlich auch, dass die Futterkomponenten bzw. das Beladungsrezept computergestützt vollautomatisiert oder teilautomatisiert bestimmt und berechnet werden.

Neben den Informationen über die Art der Futterkomponente, beispielsweise Kraftfutter, Maissilage oder Stroh, und der jeweiligen Zielmenge, kann der Benutzer weitere Informationen bereitstellen, wie den Lagerort der Futterkomponente, einen oder mehrere optimale Betriebsparameter für die Ladekomponenten des Futtermischwagens 10 zu einzelnen Futterkomponenten und dergleichen.

Die Steuereinheit 32 erhält in Schritt S2 die Informationen zu den einzufüllenden Futterkomponenten dadurch, dass die Auswahl der Futterkomponenten bzw. das Rezeptes durch den Benutzer direkt an der Benutzerschnittstelle 36 am Futtermischwagen 10 eingegeben wird.

Alternativ kann eine entsprechende Eingabe an einem entfernten Computer erfolgen, der mittels eine Netzwerks und des Kommunikationsmoduls mit dem Futtermischwagen, genauer gesagt der Beladungs-Steuereinheit 32 in Verbindung steht.

Denkbar ist auch, dass die weiteren Informationen über den Lagerort der jeweiligen Futterkomponente und/oder die optimalen Betriebsparameter der Ladekomponente für diese Futterkomponente in der Steuereinheit 32 hinterlegt sind und/oder die Steuereinheit 32 diese weiteren Informationen mittels des Kommunikationsmoduls von einem Server, beispielsweise einen über das Internet erreichbaren Server, abruft.

Die Steuereinheit 32 speichert die erhaltenen Informationen zu den einzufüllenden Futterkomponenten ab.

In Schritt S3 startet der Fahrer des Futtermischwagens 10 den Futtermischwagen 10, um den Beladevorgang zu beginnen. Der Futtermischwagen 10 wird also von einem Fahrer gesteuert und kontrolliert, d.h. der Futtermischwagen 10 ist nicht autonom. Dabei dient die Steuereinheit 32 zur Unterstützung des Fahrers und erleichtert seine Arbeit.

In Schritt S4 beginnt die Steuereinheit 32, die verschiedenen Ladekomponenten anzusteuern.

Beispielsweise steuert die Steuereinheit 32 das Navigationssystem 34 so, dass das Navigationssystem 34 den aktuellen Standort des Futtermischwagens 10 bestimmt und an die Steuereinheit 32 übermittelt (Schritt S4.1). Die Steuereinheit 32 ermittelt dann, ob sich der Futtermischwagen 10 am Lagerort einer der einzufüllenden Futterkomponenten befindet.

Dies ist üblicherweise zu Beginn des Beladevorgangs jedoch nicht der Fall, da der Futtermischwagen 10 an seinem Abstellplatz steht.

Die Steuereinheit 32 erkennt somit im erläuterten Beispiel, dass sich der Futtermischwagen 10 nicht am Lagerort einer einzufüllenden Futterkomponente befindet und gibt dem Fahrer einen entsprechenden Hinweis mittels der Benutzerschnittstelle 36 aus (Schritt S4.2).

Auch ist es möglich, dass die Steuereinheit 32 deswegen die Aktivierung der Ladekomponenten durch den Fahrer verhindert.

Die Steuereinheit 32 übergibt sodann den Lagerort der als nächstes einzufüllenden Futterkomponente an das Navigationssystem 34. Das Navigationssystem 34 gibt dem Fahrer anschließend in Schritt S4.3 Anweisungen mittels der Benutzerschnittstelle 36 aus, zu welchem Lagerort der Futtermischwagen 10 zu fahren ist bzw. wie dieser Lagerort zu erreichen ist.

In Schritt S5 fährt der Fahrer den Futtermischwagen unter Anleitung des Navigationssystems 34 zum Lagerort der als erstes einzufüllenden Futterkomponente, beispielsweise ein Fahrsilo.

Dort angekommen erkennt Steuereinheit 32 und/oder das Navigationssystem 34 anhand des aktuellen Standorts, dass sich der Futtermischwagen 10 nun an einem Lagerort einer einzufüllenden Komponente befindet (Schritt S6).

Der Fahrer möchte nun die Futterkomponente aufnehmen. Hierzu aktiviert der Fahrer in Schritt S7 das Aufnahmewerkzeug 14, beispielsweise die Fräswalze 22, um den Befüllvorgang zu beginnen.

Zu diesem Zeitpunkt erlaubt die Steuereinheit 32 die Aktivierung des Aufnahmewerkzeugs 14, da sie in Schritt S6 festgestellt hat, dass sich der Futtermischwagen 10 am Lagerort der einzufüllenden Futterkomponente befindet.

Trotzdem aktiviert die Steuereinheit 32 keine der mechanischen Ladekomponenten automatisch, sondern die Ladekomponenten werden nur nach Aktivierung durch den Fahrer gestartet. Hierbei genügt eine Aktivierung des Befüllvorgangs, damit die Steuereinheit 32 alle mechanischen Ladekomponenten ansteuern kann. Dadurch behält der Fahrer die Kontrolle über den Futtermischwagen 10.

Sobald der Fahrer den Befüllvorgang gestartet bzw. das Aufnahmewerkzeug 14 aktiviert hat, steuert die Steuereinheit 32 die mechanischen Ladekomponenten in Abhängigkeit der einzufüllenden Futterkomponente (Schritt S8).

Beispielsweise steuert sie in Schritt S8.1 die Aufnahmegeschwindigkeit des Aufnahmewerkzeugs 14, hier also die Rotationsgeschwindigkeit der Fräswalze 22, in Abhängigkeit der einzufüllenden Futterkomponente.

Die Steuerung erfolgt dabei anhand der optimalen Betriebsparameter der entsprechenden Ladekomponente für die jeweilige Futterkomponente. Beispielsweise ist die optimale Rotationsgeschwindigkeit der Fräswalze 22 für Maissilage eine andere als für Stroh.

Zur Einstellung der Aufnahmegeschwindigkeit, im Beispiel also der Rotationsgeschwindigkeit der Fräswalze 22, kann die Steuereinheit 32 den Hauptmotor 18, insbesondere die Drehzahl des Hauptmotors 18 Steuern (Schritt S8.2). Dies ist insbesondere bei hydraulisch betriebenen Fräswalzen 22 der Fall.

Auch kann zur Steuerung der Motordrehzahl der Zustand der übrigen Komponenten des Futtermischwagens 10 herangezogen werden.

Außerdem startet die Steuereinheit 32 das Beladeband 16 und stellt die Bandgeschwindigkeit des Beladebands 16 in Abhängigkeit der aktuell eingefüllten Futterkomponente ein (Schritt S8.3).

Auch hier existieren für verschiedene Futterkomponenten verschiedene optimale Bandgeschwindigkeiten. Beispielsweise ist die optimale Bandgeschwindigkeit bei stark staubenden Futterkomponenten geringer als bei feuchten Futterkomponenten.

Die Steuereinheit 32 kann die Bandgeschwindigkeit des Beladebands 16 auch in Abhängigkeit der Aufnahmegeschwindigkeit, insbesondere der Rotationsgeschwindigkeit der Fräswalze 22 steuern, um zu gewährleisten, dass die vom Aufnahmewerkzeug 14 aufgenommene Futterkomponente auch in den Futterbehälter 12 transportiert wird.

Ebenfalls steuert die Steuereinheit 32 die im Futterbehälter 12 befindlichen Mischwerkzeuge 26, im Beispiel also Mischschnecken. Beispielsweise startet die Steuereinheit 32 die Mischwerkzeuge 26 und stellt deren Mischerdrehzahl auf die optimale Drehzahl für die aufzunehmende Futterkomponente ein (Schritt S8.4).

Ebenfalls kann die Steuereinheit 32 die Mischwerkzeuge 26 nach einer vorbestimmten Zeit, die ebenfalls einen optimalen Betriebsparameter darstellt, ausschalten. Dadurch wird verhindert, dass die im Futterbehälter 12 befindlichen Futterkomponenten vermusen oder sich entmischen.

Während des Befüllvorgangs für die einzufüllende Futterkomponente kann der Fahrer den Arm 24 des Aufnahmewerkzeugs 14 steuern, um die Fräswalze 22 relativ zum übrigen Futtermischwagen 10 zu bewegen.

Im gezeigten Ausführungsbeispiel greift die Steuereinheit 32 nicht in die Bewegung des Arms 24 und somit der Fräswalze 22 ein. Es ist jedoch auch denkbar, dass die Steuereinheit 32 auch die Bewegung des Arms 24 und somit die Bewegung der Fräswalze 22 steuert, um den Fahrer weiter zu entlasten.

Während des Befüllvorgangs steuert die Steuereinheit 32 die Ladekomponenten auch aufgrund der aufgenommenen Ist-Menge der Futterkomponente an (Schritt S9).

Hierzu erhält die Steuereinheit 32 auf Anfrage und/oder in regelmäßigen Abständen Messwerte der Wiegevorrichtung 28, die das Gewicht des im Futterbehälters 12 befindlichen Futters angeben. Hieraus kann die Steuereinheit in Schritt S9.1 die bereits aufgenommene Ist-Menge der aktuell eingefüllten Futterkomponente bestimmen.

Die Steuereinheit 32 vergleicht die Ist-Menge mit der Zielmenge (Schritt 9.2) und überprüft, ob die Zielmenge erreicht wurde.

Um die Zielmenge möglichst exakt zu erreichen, kann die Steuereinheit 32 die bereits aufgenommene Ist-Menge mit einem Schwellwert vergleichen, der in Abhängigkeit der Zielmenge bestimmt ist. Beispielsweise beträgt der Schwellwert 80 % der Zielmenge oder ist um einen bestimmten Betrag, wie 10 kg, geringer als die Zielmenge.

Wenn die Ist-Menge den Schwellwert überschreitet, reduziert die Steuereinheit 32 in Schritt 9.3 die Aufnahmegeschwindigkeit des Aufnahmewerkzeugs 14, im Ausführungsbeispiel somit die Rotationsgeschwindigkeit der Fräswalze 22. Dadurch wird die pro Sekunde eingefüllte Futtermenge reduziert, wodurch der Zielwert genauer erreicht werden kann.

Sobald dann die Ist-Menge der Zielmenge entspricht, reduziert die Steuereinheit 32 in Schritt S9.4 die Aufnahmegeschwindigkeit auf null, d.h. sie stoppt das Aufnahmewerkzeug 14. Auch das Beladeband 16 wird kurze Zeit später gestoppt, d.h. die Bandgeschwindigkeit auf null reduziert.

Die Steuereinheit 32 gibt nun über die Benutzerschnittstelle 36 dem Fahrer einen entsprechenden Hinweis aus, dass diese Futterkomponente vollständig eingeladen wurde.

Zudem steuert die Steuereinheit 32 nun das Navigationssystem 34, um den Fahrer zum nächsten Lagerort (Schritt S5) bzw. zum Stall zu leiten bzw. anzuweisen, dorthin zu fahren (Schritt S10).

Der Fahrer fährt nun den Futtermischwagen 10 wie bereits zu Schritt S5 beschrieben zum Lagerort der nächsten einzufüllenden Futterkomponente. Das Verfahren wiederholt sich für die nächste aufzunehmende Futterkomponente somit ab Schritt S5.

Ist die letzte Futterkomponente eingeladen worden, fährt der Fahrer den Futtermischwagen 10 in den Stall und gibt aus dem Futterbehälter 12 die nun vermischten Futterkomponenten in an sich bekannter Weise aus.

Durch die Steuerung der Ladekomponenten durch die Belade-Steuereinheit 32 wird der Fahrer während des Beladevorgangs, insbesondere des eigentlichen Befüllvorgangs, entlastet.

Gleichzeitig wird sichergestellt, dass nur genau die Zielmenge an Futter aufgenommen und verfüttert wird, wodurch Überfütterung und Verschwendung von Futtermittel verhindert wird.

Zudem wird eine Verunreinigung der Umgebung beim Beladen, beispielsweise durch Staub oder überschüssiges Futter vermieden, da die Ladekomponenten stets mit den für die jeweilige Futterkomponente optimalen Betriebsparametern betrieben werden.

Außerdem wird durch die Prüfung des aktuellen Standorts des Futtermischwagens 10 gewährleistet, dass stets die korrekte Futterkomponente aufgenommen wird.

## Patentansprüche

1. Verfahren zur Steuerung eines Beladevorgangs eines Futtermischwagens (10) mit einem Futterbehälter (12), wenigstens einer Ladekomponente und einer Beladungs-Steuereinheit (32) zur Steuerung der Ladekomponente zur Durchführung des Beladevorgangs des Futtermischwagens (10) mit Futter, wobei das Verfahren die folgenden Schritte umfasst:
- Erhalten von Informationen über wenigstens eine in den Futtermischwagen (10) einzufüllende Futterkomponente durch die Steuereinheit (32),
- Ansteuern der wenigstens einen Ladekomponente in Abhängigkeit der wenigstens einen einzufüllenden Futterkomponente durch die Steuereinheit (32),
wobei die Steuereinheit (32) die wenigstens eine Ladekomponente nur nach Aktivierung eines Befüllvorgangs oder nach Aktivierung der entsprechenden Ladekomponente durch den Fahrer des Futtermischwagens (10) ansteuert.

2. Verfahren nach Anspruch 1, **dadurch gekennzeichnet, dass** die Informationen über die Futterkomponente die Art der Futterkomponente, wie Kraftfutter, Maissilage oder Stroh, die einzufüllende Zielmenge der Futterkomponente, wenigstens einen optimalen Betriebsparameter der Ladekomponente für diese Futterkomponente und/oder den Lagerort der Futterkomponente umfasst.

3. Verfahren nach Anspruch 1 oder 2, **dadurch gekennzeichnet, dass** die wenigstens eine Ladekomponente eine mechanische Ladekomponente und/oder eine kontrollierende Ladekomponente ist.

4. Verfahren nach einem der vorhergehenden Ansprüche, **dadurch gekennzeichnet, dass** die Steuereinheit (32) die Ladekomponente, die eine mechanische Ladekomponente ist, ansteuert.

5. Verfahren nach einem der vorhergehenden Ansprüche, **dadurch gekennzeichnet, dass** die wenigstens eine Ladekomponente ein Aufnahmewerkzeug (14) für Futter, insbesondere eine Fräswalze (22) des Futtermischwagens (10) ist, insbesondere wobei die Steuereinheit (32) die Aufnahmegeschwindigkeit, insbesondere die Rotationgeschwindigkeit der Fräswalze (22), in Abhängigkeit der einzufüllenden Futterkomponente steuert.

6. Verfahren nach Anspruch 5, **gekennzeichnet durch** die folgenden Schritte:
- die Steuereinheit (32) erhält eine Zielmenge an Futter der einzufüllenden Futterkomponente,
- die Steuereinheit (32) ermittelt die Ist-Menge an eingefülltem Futter der einzufüllenden Futterkomponente, und
- die Steuereinheit (32) steuert die Aufnahmegeschwindigkeit in Abhängigkeit der Zielmenge und der Ist-Menge,
insbesondere wobei die Steuereinheit (32) das Aufnahmewerkzeug (14) stoppt, sobald die Ist-Menge der Zielmenge entspricht, und/oder wobei die Steuereinheit (32) die Aufnahmegeschwindigkeit reduziert, bevor die Ist-Menge der Zielmenge entspricht, insbesondere wenn die Ist-Menge einen von der Zielmenge abhängigen Schwellwert überschreitet.

7. Verfahren nach Anspruch 6, **dadurch gekennzeichnet, dass** der Futtermischwagen (10) eine Wiegevorrichtung (28) für den Futterbehälter aufweist, wobei die Steuereinheit (32) die Messwerte der Wiegevorrichtung (28) erhält und anhand dessen die Ist-Menge ermittelt.

8. Verfahren nach einem der vorhergehenden Ansprüche, **dadurch gekennzeichnet, dass** die wenigstens eine Ladekomponente ein Beladeband (16) des Futtermischwagens (10) ist, insbesondere wobei die Steuereinheit (32) die Bandgeschwindigkeit des Beladebandes (16) in Abhängigkeit der einzufüllenden Futterkomponente steuert.

9. Verfahren nach Anspruch 8, **dadurch gekennzeichnet, dass** die Steuereinheit (32) die Geschwindigkeit des Beladebands (16) auch in Abhängigkeit der Aufnahmegeschwindigkeit, insbesondere der Rotationgeschwindigkeit der Fräswalze (22) steuert.

10. Verfahren nach einem der vorhergehenden Ansprüche, **dadurch gekennzeichnet, dass** die wenigstens eine Ladekomponente ein Mischwerkzeug (26), insbesondere eine Mischschnecke des Futtermischwagens (10) ist, insbesondere wobei die Steuereinheit (32) das Mischwerkzeug (26) in Abhängigkeit der einzufüllenden Futterkomponente startet oder stoppt und/oder die Mischerdrehzahl des Mischwerkzeugs (26) in Abhängigkeit der einzufüllenden Futterkomponente steuert.

11. Verfahren nach einem der vorhergehenden Ansprüche, **dadurch gekennzeichnet, dass** die wenigstens eine Ladekomponente ein Hauptmotor (18) des Futtermischwagens (10) ist, insbesondere wobei die Steuereinheit (32) die Motordrehzahl des Hauptmotors (18) in Abhängigkeit der einzufüllenden Futterkomponente steuert.

12. Verfahren nach einem der vorhergehenden Ansprüche, **dadurch gekennzeichnet, dass** die wenigstens eine Ladekomponente ein Navigationssystem (34) des Futtermischwagens (10) ist, insbesondere basierend auf einem globalen Navigationssatellitensystem, wobei die Steuereinheit (32) den Lagerort der einzufüllenden Futterkomponente erhält, und
wobei der aktuelle Standort des Futtermischwagens (10) bestimmt und mit dem Lagerort der Futterkomponente verglichen wird, und in Abhängigkeit des Vergleichs weitere Ladekomponenten angesteuert werden und/oder dem Fahrer des Futtermischwagens (10) ein Hinweis ausgegeben wird.

13. Verfahren nach einem der vorhergehenden Ansprüche, **dadurch gekennzeichnet, dass** die Steuereinheit (32) die Informationen über die wenigstens eine in den Futtermischwagen (10) einzufüllende Futterkomponente erhält durch Eingabe des Fahrers an einer Benutzerschnittstelle (36) des Futtermischwagens (10), durch Empfangen einer Eingabe eines Benutzers an einem entfernten Computer und/oder durch Erhalten eines Laderezepts, das verschiedene Futterkomponenten und optional deren Zielmenge umfasst.

14. Futtermischwagen mit einem Futterbehälter (12), wenigstens einer Ladekomponente und einer Beladungs-Steuereinheit (32) zur Steuerung der Ladekomponente zur Durchführung eines Beladevorgangs des Futtermischwagens (10) mit Futter, wobei der Futtermischwagen (10), insbesondere die Steuereinheit (32) dazu eingerichtet ist, ein Verfahren gemäß einem der vorhergehenden Ansprüche auszuführen, insbesondere wobei der Futtermischwagen (10) eine Wiegevorrichtung (28) und/oder einen Ladecomputer (30) aufweist.

15. Futtermischwagen nach Anspruch 14, **dadurch gekennzeichnet, dass** der Futtermischwagen (10) ein Aufnahmewerkzeug (14) für Futter, insbesondere eine Fräswalze (22); ein Beladeband (16); ein Mischwerkzeug (26), insbesondere eine Mischschnecke; einen Hauptmotor (18); und/oder ein Navigationssystem (34) als Ladekomponente aufweist.

## Claims

1. Method for controlling a loading process of a feed mixing wagon (10) having a feed hopper (12), at least one loading component and a loading control unit (32) for controlling the loading component so as to perform the process of loading the feed mixing wagon (10) with feed, the method comprising the following steps:
- the control unit (32) receiving information about at least one feed component to be introduced into the feed mixing wagon (10),
- the control unit (32) actuating the at least one loading component as a function of the at least one feed component to be introduced,
wherein the control unit (32) only actuates the at least one loading component once the driver of the feed mixing wagon (10) has activated a filling process or activated the corresponding loading component.

2. Method according to claim 1, **characterised in that** the information about the feed component includes the type of feed component, such as concentrated feed, maize silage or straw, the target quantity of the feed component to be introduced, at least one optimum operating parameter of the loading component for this feed component and/or the storage location of the feed component.

3. Method according to claim 1 or 2, **characterised in that** the at least one loading component is a mechanical loading component and/or a controlling loading component.

4. Method according to one of the preceding claims, **characterised in that** the control unit (32) actuates the loading component that is a mechanical loading component.

5. Method according to one of the preceding claims, **characterised in that** the at least one loading component is a feed intake tool (14), in particular a milling drum (22) of the feed mixing wagon (10), in particular wherein the control unit (32) controls the intake speed, in particular the rotational speed, of the milling drum (22) as a function of the feed component to be introduced.

6. Method according to claim 5, **characterised by** the following steps:
- the control unit (32) receives a target quantity of feed of the feed to be introduced,
- the control unit (32) determines the actual introduced quantity of feed of the feed component to be introduced, and
- the control unit (32) controls the intake speed as a function of the target quantity and the actual quantity,
in particular wherein the control unit (32) stops the intake tool (14) as soon as the actual quantity corresponds to the target quantity, and/or wherein the control unit (32) reduces the intake speed before the actual quantity corresponds to the target quantity, in particular when the actual quantity exceeds a threshold value dependent on the target quantity.

7. Method according to claim 6, **characterised in that** the feed mixing wagon (10) has a weighing device (28) for the feed hopper, wherein the control unit (32) receives the measured values from the weighing device (28) and determines the actual quantity on the basis thereof.

8. Method according to one of the preceding claims, **characterised in that** the at least one loading component is a loading belt (16) of the feed mixing wagon (10), in particular wherein the control unit (32) controls the belt speed of the loading belt (16) as a function of the feed component to be introduced.

9. Method according to claim 8, **characterised in that** the control unit (32) also controls the speed of the loading belt (16) as a function of the intake speed, in particular the rotational speed of the milling drum (22).

10. Method according to one of the preceding claims, **characterised in that** the at least one loading component is a mixing tool (26), in particular a mixing auger of the feed mixing wagon (10), in particular wherein the control unit (32) starts or stops the mixing tool (26) as a function of the feed component to be introduced and/or controls the mixer speed of the mixing tool (26) as a function of the feed component to be introduced.

11. Method according to one of the preceding claims, **characterised in that** the at least one loading component is a main motor (18) of the feed mixing wagon (10), in particular wherein the control unit (32) controls the motor speed of the main motor (18) as a function of the feed component to be introduced.

12. Method according to one of the preceding claims, **characterised in that** the at least one loading component is a navigation system (34) of the feed mixing wagon (10), in particular based on a global navigation satellite system, wherein the control unit (32) receives the storage location of the feed component to be introduced, and
wherein the current location of the feed mixing wagon (10) is determined and compared with the storage location of the feed component, and depending on the comparison, further loading components are actuated and/or a notification is output to the driver of the feed mixing wagon (10).

13. Method according to one of the preceding claims, **characterised in that** the control unit (32) receives the information about the at least one feed component to be introduced into the feed mixing wagon (10) by the driver inputting this information into a user interface (36) of the feed mixing wagon (10), by receiving an input made by a user on a remote computer and/or by receiving a loading recipe which includes various feed components and optionally the target quantity thereof.

14. Feed mixing wagon comprising a feed hopper (12), at least one loading component and a loading control unit (32) for controlling the loading component so as to perform a process of loading the feed mixing wagon (10) with feed, wherein the feed mixing wagon (10), in particular the control unit (32) is designed to carry out a method according to one of the preceding claims, in particular wherein the feed mixing wagon (10) has a weighing device (28) and/or a loading computer (30).

15. Feed mixing wagon according to claim 14, **characterised in that**, as loading component, the feed mixing wagon (10) has: a feed intake tool (14), in particular a milling drum (22); a loading belt (16); a mixing tool (26), in particular a mixing auger; a main motor (18); and/or a navigation system (34).

## Revendications

1. Procédé de commande d'un processus de chargement d'un camion mélangeur d'aliments pour animaux (10) comprenant une cuve d'aliments (12), au moins un élément de chargement et une unité de commande de chargement (32) permettant de commander l'élément de chargement de façon qu'il effectue le processus de chargement du camion mélangeur (10) avec des aliments pour animaux, le procédé comprenant les étapes suivantes consistant à :
- obtenir, par l'unité de commande (32), des informations concernant au moins un composant de produit alimentaire destiné à être ajouté dans le camion mélangeur (10),
- commander, par l'unité de commande (32), l'au moins un élément de chargement en fonction de l'au moins un composant de produit alimentaire à ajouter,
ladite unité de commande (32) commandant l'au moins un élément de chargement uniquement après l'activation d'un processus d'ajout ou après l'activation de l'élément de chargement correspondant par le conducteur du camion mélangeur (10).

2. Procédé selon la revendication 1, **caractérisé en ce que** les informations concernant le composant de produit alimentaire comprennent le type de composant de produit alimentaire, tel qu'un aliment concentré, de l'ensilage de maïs ou de la paille, la quantité cible de composant de produit alimentaire à ajouter, au moins un paramètre d'exploitation optimal de l'élément de chargement relativement à ce composant de produit alimentaire et/ou la localisation de stockage du composant de produit alimentaire.

3. Procédé selon la revendication 1 ou 2, **caractérisé en ce que** l'au moins un élément de chargement est un élément de chargement mécanique et/ou un élément de chargement de contrôle.

4. Procédé selon l'une des revendications précédentes, **caractérisé en ce que** l'unité de commande (32) commande l'élément de chargement, qui consiste en un élément de chargement mécanique.

5. Procédé selon l'une des revendications précédentes, **caractérisé en ce que** l'au moins un élément de chargement est un outil de prélèvement d'aliments (14), notamment un tambour de ramassage (22) du camion mélangeur (10) ; ladite unité de commande (32) commandant notamment la vitesse de prélèvement, en particulier la vitesse de rotation du tambour de ramassage (22), en fonction du composant de produit alimentaire à ajouter.

6. Procédé selon la revendication 5, **caractérisé par** les étapes suivantes lors desquelles :
- l'unité de commande (32) reçoit une quantité cible d'aliment constituant un composant de produit alimentaire à ajouter,
- l'unité de commande (32) détermine la quantité réelle ajoutée du composant de produit alimentaire à ajouter, et
- l'unité de commande (32) commande la vitesse de prélèvement en fonction de la quantité cible et de la quantité réelle,
étant entendu notamment que l'unité de commande (32) arrête l'outil de prélèvement (14) dès que la quantité réelle correspond à la quantité cible, et/ou que l'unité de commande (32) réduit la vitesse de prélèvement avant que la quantité réelle ne corresponde à la quantité cible, notamment si la quantité réelle dépasse une valeur seuil dépendant de la quantité cible.

7. Procédé selon la revendication 6, **caractérisé en ce que** le camion mélangeur (10) présente un dispositif de pesée (28) pour la cuve d'aliments, l'unité de commande (32) recevant les valeurs mesurées du dispositif de pesée (28) et déterminant ladite quantité réelle à l'aide de celles-ci.

8. Procédé selon l'une des revendications précédentes, **caractérisé en ce que** l'au moins un élément de chargement est un tapis de chargement (16) du camion mélangeur (10), ladite unité de commande (32) commandant notamment la vitesse du tapis de chargement (16) en fonction du composant de produit alimentaire à ajouter.

9. Procédé selon la revendication 8, **caractérisé en ce que** l'unité de commande (32) commande également la vitesse du tapis de chargement (16) en fonction de la vitesse de prélèvement, notamment la vitesse de rotation du tambour de ramassage (22).

10. Procédé selon l'une des revendications précédentes, **caractérisé en ce que** l'au moins un élément de chargement est un outil de mélange (26), notamment une vis de mélange du camion mélangeur (10), ladite unité de commande (32) démarrant ou arrêtant notamment l'outil de mélange (26) en fonction du composant de produit alimentaire à ajouter et/ou commandant la vitesse de mélange de l'outil de mélange (26) en fonction du composant de produit alimentaire à ajouter.

11. Procédé selon l'une des revendications précédentes, **caractérisé en ce que** l'au moins un élément de chargement est un moteur principal (18) du camion mélangeur (10), ladite unité de commande (32) commandant notamment le régime dudit moteur principal (18) en fonction du composant de produit alimentaire à ajouter.

12. Procédé selon l'une des revendications précédentes, **caractérisé en ce que** l'au moins un élément de chargement est un système de navigation (34) du camion mélangeur (10), reposant notamment sur la géolocalisation et navigation par un système de satellites, ladite unité de commande (32) obtenant la localisation de stockage du composant de produit alimentaire à ajouter, et
la localisation actuelle du camion mélangeur (10) étant déterminée et comparée à la localisation de stockage du composant de produit alimentaire et, en fonction de la comparaison, d'autres éléments de chargement sont commandés et/ou un message est communiqué au conducteur du camion mélangeur (10).

13. Procédé selon l'une des revendications précédentes, **caractérisé en ce que** l'unité de commande (32) reçoit les informations concernant l'au moins un composant de produit alimentaire à ajouter dans le camion mélangeur (10) sous l'effet d'une entrée réalisée par le conducteur sur une interface utilisateur (36) du camion mélangeur (10), par réception d'une entrée effectuée par un utilisateur sur un ordinateur distant et/ou par obtention d'une recette de chargement comprenant divers composants de produit alimentaire et éventuellement leur quantité cible.

14. Camion mélangeur d'aliments pour animaux comprenant une cuve d'aliments (12), au moins un élément de chargement et une unité de commande de chargement (32) destinée à commander l'élément de chargement pour effectuer un processus de chargement du camion mélangeur (10) avec des aliments, ledit camion mélangeur (10), notamment l'unité de commande (32), étant conçu pour mettre en oeuvre un procédé selon l'une des revendications précédentes, ledit camion mélangeur (10) présentant notamment un dispositif de pesée (28) et/ou un ordinateur de chargement (30).

15. Camion mélangeur d'aliments pour animaux selon la revendication 14, **caractérisé en ce que** le camion mélangeur (10) présente un outil de prélèvement d'aliments (14), notamment un tambour de ramassage (22) ; un tapis de chargement (16) ; un outil de mélange (26), notamment une vis de mélange ; un moteur principal (18) ; et/ou un système de navigation (34) comme élément de chargement.
